# EUROPÄISCHE PATENTANMELDUNG

(11) **EP 1 440 776 A1**
(43) Veröffentlichungstag der Anmeldung: **28.07.2004**
(21) Anmeldenummer: 04000835.1
(22) Anmeldetag: 16.01.2004
(51) Int. Cl.: B27B 5/06, B23D 45/10

(54) **Vorrichtung zum Trennsägen von gebundenen Druckerzeugnissen bzw. Doppelnutzen**

(30) Priorität: 21.01.2003 DE 10302066
(71) Anmelder: Kolbus GmbH & Co. KG, 32369 Rahden (DE)
(72) Erfinder: Jahn, Dieter, 04827 Machern (DE)

(57) **Zusammenfassung**

Bei einer Vorrichtung zum Trennsägen von Doppelnutzen (5) klebegebundener oder fadengehefteter Buchblocks und Broschuren (6a,b) mit einer Fördereinrichtung zum kontinuierlichen Transportieren der Doppelnutzen und der aufgetrennten Buchblocks bzw. Broschuren bestehend aus zwei oder mehr nebeneinander angeordneten, die Doppelnutzen tragenden und ggf. mit Mitnehmern (10) hinterfassenden Plattenkettenförderern (9a,b) und zugeordneten oberen Andrückbändern (12a,b), und mit einem im Gleichlauf zur Förderrichtung der Doppelnutzen rotierend angetriebenen Kreissägeblatt (16), dessen Drehachse oberhalb der Förderebene der Doppelnutzen angeordnet ist, ist zur Erreichung einer nahezu glatten Trennung bei hohen Verarbeitungsgeschwindigkeiten vorgesehen, dass dem Kreissägeblatt (16) ein Ritzwerkzeug (13) für die Unterseite der Doppelnutzen (5) vorgeordnet ist zum Einritzen der Unterseite mit wenigstens einer linken und einer rechten, jeweils nur wenige zehntel Millimeter vom Trennsägeschnitt beabstandeten Ritzlinie.

## Beschreibung

Die Erfindung betrifft eine Vorrichtung zum Trennsägen von Doppelnutzen klebegebundener oder fadengehefteter Buchblocks oder Broschuren in einer Ausbildung gemäß dem Oberbegriff des Patentanspruchs 1.

Die buchbinderische Verarbeitung von Druckerzeugnissen gliedert sich in verschiedene Teilprozesse. Beim Teilprozess Blockherstellung folgt nach dem Sammeln und Fügen des Blocks der Prozessabschnitt Schneiden am Block. Hier erhält der Buchblock bzw. die Broschur einen dreiseitigen, glatten Beschnitt an den nichtgebundenen Kanten. Die geschlossenen Seiten der Falzbogen werden dabei geöffnet, so dass jede einzelne Seite des Blocks aufgeschlagen werden kann. Zur Leistungssteigerung der Prozessabschnitte Sammeln und Fügen werden die Buchblocks bzw. die Broschuren mitunter als sogenannte Doppelnutzen hergestellt. Dabei entsteht ein Block mit zwei gleichartigen Buchblocks bzw. Broschuren, die entweder Fuß an Kopf oder Kopf an Kopf bzw. Fuß an Fuß im Doppelnutzen angeordnet sind. Vor dem Dreiseitenschnitt erfolgt dann zunächst eine Trennung des Doppelnutzens in zwei Einzelblocks.

In dem US-Patent 2 822 003 ist beispielhaft eine Vorrichtung dargestellt, in der die Doppelnutzen an einer Bandsäge vorbeigeführt werden, mit der die Trennung in Einzelnutzen vollzogen wird. Die verhältnismäßig niedrige Geschwindigkeit des Sägeblattes ermöglicht nur geringe Trennleistungen. Außerdem ist das Ersetzen von verschlissenen Sägeblättern aufwendig.

In Fließstrecken, wo im kontinuierlichen Fluss Buchblocks bzw. Broschuren gesammelt, gefügt und beschnitten werden, kommen zur Doppetnutzentrennung Trennsägen [z.B. Trennsäge TR 160, Kolbus GmbH & Co. KG, Rahden] mit rotierend angetriebenen Sägeblättern zum Einsatz. Die Doppelnutzen gelangen dabei in ein Magazin, aus dem der jeweils unterste Doppelnutzen vereinzelt und mit dem Rücken voran ausgeschoben wird zur Übergabe an zwei nebeneinander angeordneten Plattenkettenförderern mit hinter die Doppelnutzen fassenden Mitnehmern. Während des kontinuierlichen Transports werden die mit dem Frontschnitt an den Mitnehmern anliegenden Doppelnutzen seitlich über Schleppfedern an einer festen Kante ausgerichtet und durch obere Andrückbänder sicher auf den Plattenkettenförderern gehalten. Die Trennung erfolgt mit einem zwischen den Plattenkettenförderern angeordneten, mit seiner Drehachse oberhalb der Förderebene der Doppelnutzen liegenden und im Gleichlauf zur Förderrichtung rotierenden Kreissägeblatt, dem als Gegenschneide eine auswechselbare, mit einem Einschnitt versehene Gegenplatte zwischen den Plattenketten zugeordnet ist.

Aufgrund auftretender Vibrationen des Kreissägeblattes und durch den Späneabrieb erweitert sich der Einschnitt in dieser Platte und die Gegenschneide für das Kreissägeblatt ist nicht mehr scharf ausgebildet mit der Folge, dass beim Trennschnitt die Sägezähne des Kreissägeblattes beim Blattauslauf auf der Unterseite des Doppelnutzens Splitter und dgl. ausreißen. Insbesondere der Broschurenumschlag wird dabei durch Abplatzungen und Ausrisse beschädigt, die nur durch einen meist unerwünscht großen Beschnitt im Dreischneider beseitigt werden können und einen häufigen Wechsel der Gegenschneide nach sich ziehen. Die aufgezeigten Probleme nehmen dabei proportional zur Verarbeitungsgeschwindigkeit zu.

Aufgabe der Erfindung ist es, eine Vorrichtung der oben beschriebenen bekannten Gattung dahingehend zu verbessern, dass eine nahezu glatte Trennung bei hohen Verarbeitungsgeschwindigkeiten ermöglicht wird.

Die Aufgabe der Erfindung wird durch die Vorrichtung mit den Merkmalen des Patentanspruchs 1 in überraschend einfacher und wirtschaftlicher Weise gelöst. Vorteilhafte Weiterbildungen der Erfindung sind durch die in den Unteransprüchen angegebenen Merkmale gekennzeichnet.

Mit dem Einritzen der Unterseite des Doppelnutzens wird der Auslauf des Kreissägeblattes in das Innere des Buchblocks bzw. der Broschur verlegt. Bereits einige zehntel Millimeter tiefe Ritzlinien links und rechts des eigentlichen Trennsägeschnittes reichen aus, um dem letzten, von dem Kreissägeblatt zu durchtrennenden Blatt des Doppelnutzens durch die darunter liegenden und eingeritzten Blätter ein ausreichendes Gegenlager für den Trennschnitt darzubieten. Eine Gegenschneide ist nicht mehr erforderlich. Die Ausrisse fallen wesentlich kleiner aus und ein nur wenige Millimeter breiter Beschnitt im Dreischneider reicht aus um glatte Kanten am fertig beschnittenen Buchblock bzw. Broschur herbeizuführen. Insbesondere der Broschurenumschlag erhält mit dem erfindungsgemäßen Trennsägen eine glatte Schnittlinie ohne Ausrisse.

Vorzugsweise erfolgt das Einritzen mit einem rotierend angetriebenen, zweireihigen Ritzkreismesser, das zur Erreichung bester Ritzergebnisse im Gleichlauf zur Förderrichtung angetrieben ist. Damit erfolgt eine spanlose Vorritzung. Dies schont einerseits den Rücken des Doppelnutzen und erfordert andererseits keine aufwendige Späneabsaugung.

Gemäß Anspruch 4 ist das Ritzkreismesser gebildet aus zwei aneinander gespannten Messerblättern, wobei deren Abstand und damit die Schnittbreite des Ritzkreismessers durch Zwischenstücke einstellbar ist. Anspruch 5 definiert eine bevorzugte Ausführungsform der Messerblätter, indem diese am Umfang eine Vielzahl von einzelnen durch einen Freischnitt voneinander getrennten Messerschneiden vorweisen, die eine bezüglich des Flugkreises der Messerblätter geneigte Schneidlinie aufweisen derart, dass sich beim Einritzen eine ansteigende Schneidlinie ergibt. Hierdurch ergibt sich ziehender Schnitt, der zu einem qualitativ hochwertigen Schnitt führt.

Die bevorzugte Schnittbreite des Ritzwerkzeuges ist ca. 0,2 bis 1 mm breiter als der Trennsägeschnitt. Einerseits werden damit bereits gute Trennschnittergebnisse erzielt, andererseits ist kein hoher konstruktiver Aufwand zur Erreichung der notwendigen Fluchtgenauigkeiten erforderlich. Zur mittigen Positionierung des Ritzwerkzeuges zum Kreissägeblatt ist eine Verstellung des Ritzwerkzeuges quer zur Förderrichtung der Doppelnutzen zweckmäßig. Vorteilhaft ist das Ritzwerkzeug in der Höhe verstellbar zur Einstellung einer bestimmten Ritztiefe und zum außer Eingriff bringen des Ritzwerkzeuges.

Für dünne Produkte, die in Bereichen abseits des gebundenen Rückens nur geringe Steifigkeiten aufweisen, ist eine Niederhalteschiene vorteilhaft, die im Bereich des Ritzwerkzeuges auf die Oberseite der Doppelnutzen einwirkt zur Gewährleistung einer gleichbleibenden Ritztiefe. Aus dem gleichen Grund ist eine Gegenplatte zwischen den Plattenketten vorgesehen zur Abstützung des Doppelnutzens beim Trennschnitt mit dem Kreissägeblatt. Der Einschnitt für den Durchlauf des Kreissägeblattes ist dabei breiter als die Schnittbreite des Ritzwerkzeuges. Hierdurch werden die Sägespäne ohne Hindernis aus dem Doppelnutzen herausgetragen.

Im Folgenden wird die Erfindung anhand eines Ausführungsbeispiels näher erläutert
**Fig. 1** zeigt in vereinfachter perspektivischer Ansicht eine erfindungsgemäße Trennsäge.
**Fig. 2** zeigt einen Ausschnitt der Trennsäge im Bereich der Trennstation.

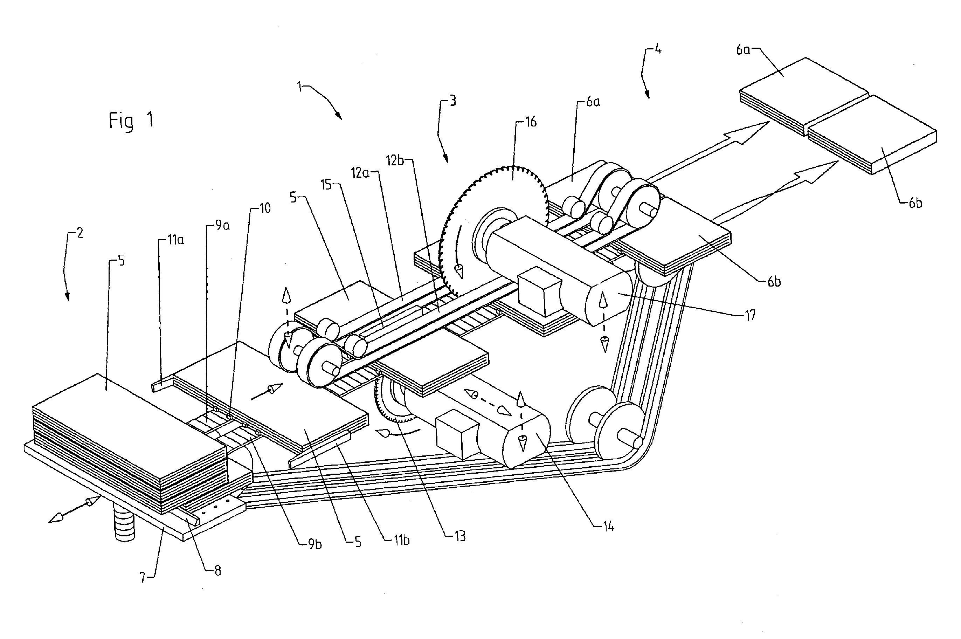

Die erfindungsgemäße Trennsäge 1 besteht im Wesentlichen aus einem Magazin 2, einer Trennstation 3 und einer Ausfuhr 4. Die als Doppelnutzen 5 hergestellten Buchblocks bzw. Broschuren gelangen über einen hier nicht dargestellten Transportpfad in das Magazin 2, das in der Figur 1 durch die gestapelte Anordnung von mehreren Doppelnutzen 5 symbolisiert ist. Mit einem vor- und zurückbewegten Saugschiebetisch 7 wird während des Vorhubes der jeweils untere Doppelnutzen 5, durch die kraftschlüssige Mitnahme der auf der Unterseite des Doppelnutzens 5 wirkenden Saugluft und zusätzlich durch die formschlüssige Mitnahme von auf dem Vorderschnitt des Doppelnutzens 5 wirkenden Mitnehmern 8, mit dem Rücken voran aus dem Magazin 2 herausgeschoben und dabei durch Umschalten von Saugluft auf Blasluft auf kontinuierlich laufende Plattenkettenförderer 9a, 9b übergeben. Die Blasluft bleibt auch während des Rückhubes des Saugschiebetisches 7 geschaltet.

Auf den Plattenkettenförderern 9a, 9b aufgesetzte Mitnehmer 10 richten den aus dem Magazin 2 vereinzelten Doppelnutzen 5 über seinen Vorderschnitt aus und ermöglichen die formschlüssige Mitnahme des Doppelnutzens 5 während des Trennvorgangs. Durch seitlich auf den Doppelnutzen 5 wirkenden Führungsschienen 11a, 11b wird der Doppelnutzen 5 zusätzlich quer zur Förderrichtung ausgerichtet. Anschließend läuft der Doppelnutzen 5 in obere Andrückbänder 12a, 12b ein, die den Doppelnutzen 5 zusätzlich zu den formschlüssig wirkenden Mitnehmern 10 kraftschlüssig auf den Plattenkettenförderern 9a, 9b halten. Die Andrückbänder 12a, 12b sind in der Höhe auf die Buchblock- bzw. Broschurendicke einstellbar.

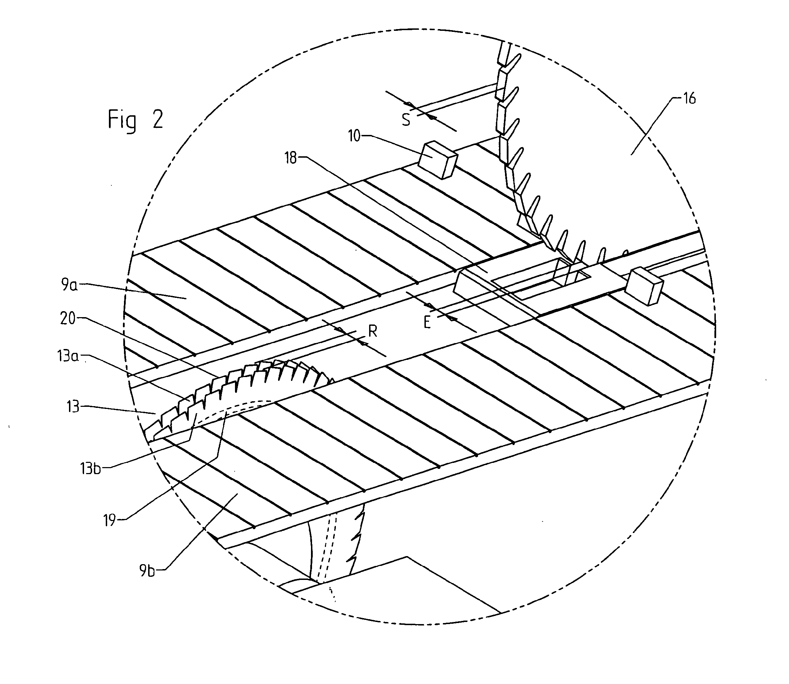

Der nun fest eingespannt vortransportierte Doppelnutzen 5 wird zunächst durch ein unterhalb der Förderebene angeordnetes und aus zwei aneinander gespannten Messerblättern 13a,b gebildetes Ritzkreismesser 13 an zwei Linien vorgeritzt, deren Abstand als Schnittbreite R in der Fig. 2 angegeben ist und durch ein Zwischenstück 19 festlegbar ist. Das Ritzkreismesser 13 ist direkt mit einem Motor 14 gekoppelt und dreht mit der in der Fig. 1 dargestellten Richtung im Gleichlauf mit der Förderrichtung. Für dünne Produkte, die in Bereichen abseits des gebundenen Rückens nur geringe Steifigkeiten aufweisen, ist eine Niederhalteschiene 15 vorgesehen, die zwischen den Andrückbändem 12a,b im Bereich des Ritzkreismessers 13 auf die Oberseite der Doppelnutzen 5 einwirkt zur Gewährleistung einer konstanten Ritztiefe in der Unterseite der Doppelnutzen 5. Das Ritzkreismesser 13 mit dem zugehörigen Motor 14 ist zur Positionierung der Ritzlinien quer zur Förderrichtung verstellbar. Ferner ist eine Höhenverstellung vorgesehen zur Einstellung einer bestimmten Ritztiefe bzw. zum außer Eingriff bringen des Ritzkreismessers 13.

Die Messerblätter 13a,b weisen am Umfang eine Vielzahl von einzelnen durch einen Freischnitt voneinander getrennten Messerschneiden 20 auf, deren Schneidlinie bezüglich des Flugkreises der Messerblätter 13a,b derart geneigt ist, dass sich beim Einritzen eine ansteigende Schneidlinie ergibt zur Durchführung eines ziehenden Schnittes. Das Einritzen erfolgt spanlos.

Nach dem Vorritzen gelangen die Doppelnutzen 5 zu einem im Gleichlauf zur Förderrichtung der Doppelnutzen 5 rotierend angetriebenen Kreissägeblatt 16, dessen Drehachse oberhalb der Förderebene der Doppelnutzen 5 angeordnet ist. Das Kreissägeblatt 16 ist direkt mit einem Motor 17 gekoppelt und durch nicht näher dargestellte Mittel höheneinstellbar. Der damit erfolgende Trennschnitt ist spanabhebend und liegt vorzugsweise genau mittig zwischen den beiden Ritzlinien, wobei die Schnittbreite R des Ritzkreismessers 13 ca. 0,2 bis 1 mm breiter als die Schnittbreite S des Kreissägeblattes 16 ist.

Dem Kreissägeblatt 16 zugeordnet ist eine Gegenplatte 18, die zwischen den Plattenkettenförderern 9a,b angeordnet ist und zur Abstützung des Doppelnutzens 5 beim Trennschnitt mit dem Kreissägeblatt 16 dient. Für den Durchlauf des Kreissägeblattes 16 ist die Gegenplatte 18 mit einem Einschnitt versehen, dessen Breite S ca. 1 bis 2 mm breiter als die Schnittbreite R des Ritzwerkzeuges 13 ist. Hierdurch werden die Sägespäne ohne Hindernis aus dem Doppelnutzen 5 herausgetragen. Die Gegenplatte 18 ist mit weiteren Öffnungen neben, vor und nach dem Durchlauf versehen zum Absaugen der zwischen den Plattenkettenförderern 9a,b auftretenden Sägespäne.

I.d.R. besteht der Doppelnutzen 5 aus Kopf an Kopf bzw. Fuß an Fuß angeordneten Buchblocks bzw. Broschuren 6a, 6b. In der Ausfuhr 4 wird dann einer der beiden voneinander getrennten Buchblocks bzw. Broschuren 6a, 6b derart umorientiert, dass zwei gleichartig orientierte Buchblocks bzw. Broschuren 6a, 6b dem nachfolgenden Dreischneider zugeführt werden. In der Fig.1 ist das Wenden des rechten Buchblocks bzw. der Broschur 6b durch einen verdrehten Pfeil symbolisch dargestellt. Das Wenden erfolgt beispielsweise mit bekannten, den Buchblock bzw. die Broschur 6b kraftschlüssig einspannenden Wendebändern. Die getrennten Buchblocks bzw. Broschuren 6a, 6b verlassen die Trennsäge 1 in einem Doppelstrom und werden durch eine hier nicht dargestellte Querübergabe auf einen Weiterförderer einem Dreischneider zugeführt.

In dem Ausführungsbeispiel werden die Doppelnutzen 5 mit dem Rücken voran transportiert. Dies ist vorteilhaft, weil dadurch das Vereinzeln aus dem Magazin 2 ohne Aufschieben der offenen Seiten erfolgt und ein Transport vom Magazin 2 durch die Trennstation 3 bis durch die Ausfuhr 4 ohne zusätzliche Mittel zum Niederhalten der sonst in Laufrichtung offenen Seiten einfach und sicher möglich ist. Die Erfindung schließt auch die Anwendung des erfindungsgemäßen Ritzkreismessers 13 bei der Trennung von mit dem Vorderschnitt voran transportierten Doppelnutzen 5 mit ein.

### Bezugszeichenliste

- 1: Trennsäge
- **2**: Magazin
- **3**: Trennstation
- **4**: Ausfuhr
- **5**: Doppelnutzen
- **6 a,b**: Buchblock bzw. Broschur
- **7**: Saugschiebetisch
- **8**: Mitnehmer
- **9 a,b**: Plattenkettenförderer
- **10**: Mitnehmer
- **11 a,b**: Führungsschienen
- **12 a,b**: Andrückband
- **13**: Ritzkreismesser
- **13 a,b**: Messerblatt
- **14**: Motor
- **15**: Niederhalteschiene
- **16**: Kreissägeblatt
- **17**: Motor
- **18**: Gegenplatte
- **19**: Zwischenstück
- **20**: Messerschneide
- **R**: Schnittbreite Ritzkreismesser
- **S**: Schnittbreite Kreissägeblatt
- **E**: Breite Einschnitt in Gegenplatte

## Patentansprüche

1. Vorrichtung zum Trennsägen von Doppelnutzen (5) klebegebundener oder fadengehefteter Buchblocks und Broschuren (6a,b) mit einer Fördereinrichtung zum kontinuierlichen Transportieren der Doppelnutzen und der aufgetrennten Buchblocks bzw. Broschuren bestehend aus zwei oder mehr nebeneinander angeordneten, die Doppelnutzen tragenden und ggf. mit Mitnehmern (10) hinterfassenden Plattenkettenförderern (9a,b) und zugeordneten oberen Andrückbändern (12a,b), und mit einem im Gleichlauf zur Förderrichtung der Doppelnutzen rotierend angetriebenen Kreissägeblatt (16), dessen Drehachse oberhalb der Förderebene der Doppelnutzen angeordnet ist, **dadurch gekennzeichnet, dass** dem Kreissägeblatt (16) ein Ritzwerkzeug (13) für die Unterseite der Doppelnutzen (5) vorgeordnet ist zum Einritzen der Unterseite mit wenigstens einer linken und einer rechten, jeweils nur wenige zehntel Millimeter vom Trennsägeschnitt beabstandeten Ritzlinie.

2. Vorrichtung nach Anspruch 1, **dadurch gekennzeichnet, dass** das Ritzwerkzeug als rotierend angetriebenes, zweireihiges Ritzkreismesser (13) ausgebildet ist.

3. Vorrichtung nach Anspruch 2, **dadurch gekennzeichnet, dass** das Ritzkreismesser (13) im Gleichlauf zur Förderrichtung angetrieben ist.

4. Vorrichtung nach Anspruch 2 oder 3, **dadurch gekennzeichnet, dass** das Ritzkreismesser (13) aus zwei aneinander gespannten Messerblättern (13a,b) gebildet ist, wobei deren Abstand und damit die Schnittbreite (R) des Ritzkreismessers (13) durch Zwischenstücke (19) einstellbar ist.

5. Vorrichtung nach Anspruch 4, **dadurch gekennzeichnet, dass** die Messerblätter (13a,b) am Umfang eine Vielzahl von einzelnen durch einen Freischnitt voneinander getrennten Messerschneiden (20) vorweisen, die eine bezüglich des Flugkreises der Messerblätter (13a,b) geneigte Schneidlinie aufweisen derart, dass sich beim Einritzen eine ansteigende Schneidlinie ergibt.

6. Vorrichtung nach einem der Ansprüche 1 bis 5, **dadurch gekennzeichnet, dass** die Schnittbreite (R) des Ritzwerkzeuges ca. 0,2 bis 1 mm breiter als die Schnittbreite (S) des Kreissägeblattes (16) ist.

7. Vorrichtung nach einem der Ansprüche 1 bis 6, **dadurch gekennzeichnet, dass** das Ritzwerkzeug (13) quer zur Förderrichtung der Doppelnutzen (5) verstellbar ist.

8. Vorrichtung nach einem der Ansprüche 1 bis 7, **dadurch gekennzeichnet, dass** das Ritzwerkzeug (13) in der Höhe verstellbar ist zum Einstellen einer bestimmten Ritztiefe und zum außer Eingriff bringen des Ritzwerkzeuges (13) selbst.

9. Vorrichtung nach einem der Ansprüche 1 bis 8, **dadurch gekennzeichnet, dass** dem Ritzwerkzeug (13) eine auf die Oberseite der Doppelnutzen (5) wirkende Niederhalteschiene (15) zugeordnet ist.

10. Vorrichtung nach einem der Ansprüche 1 bis 9, **dadurch gekennzeichnet, dass** zwischen den Plattenkettenförderern (9a,b) eine dem Kreissägeblatt (16) zugeordnete, die Doppelnutzen (5) beim Trennschnitt abstützende Gegenplatte (18) vorgesehen ist mit einem bezüglich der Schnittbreite (R) des Ritzwerkzeuges (13) breiteren Einschnitt (E) für den Durchlauf des Kreissägeblattes (16) und mit weiteren Öffnungen neben, vor und nach dem Durchlauf zum Absaugen der zwischen den Plattenkettenförderern (9a,b) auftretenden Sägespäne.
